Europäisches Patentamt

European Patent Office

Office européen des brevets

(19)

(11) EP 0 654 950 B1

(12) **EUROPÄISCHE PATENTSCHRIFT**

(45) Veröffentlichungstag und Bekanntmachung des Hinweises auf die Patenterteilung:
**02.06.1999 Patentblatt 1999/22**

(51) Int Cl.⁶: **H04N 11/16**

(21) Anmeldenummer: **94118086.1**

(22) Anmeldetag: **17.11.1994**

(54) **Verfahren zur Messung, Einstellung und/oder Entzerrung von Übertragungskanälen und/oder Decodern für Fernsehsignale**

Method for measuring, adjusting and/or equalizing transmission channels and/or television signal decoders

Procédé pour mesurer, ajuster et/ou égaliser des canaux de transmission et/ou décodeurs pour des signaux de télévision

(84) Benannte Vertragsstaaten:
**DE FR GB IT LU**

(30) Priorität: **24.11.1993 DE 4339845**

(43) Veröffentlichungstag der Anmeldung:
**24.05.1995 Patentblatt 1995/21**

(73) Patentinhaber: **DEUTSCHE THOMSON-BRANDT GMBH**
**78048 Villingen-Schwenningen (DE)**

(72) Erfinder: **Plantholt, Martin**
**D-65549 Limburg (DE)**

(56) Entgegenhaltungen:
**EP-A- 0 508 333**          **US-A- 4 091 418**

- **INTERNATIONAL BROADCASTING CONVENTION, 3.Juli 1992 - 7.Juli 1992 AMSTERDAM (NL), Seiten 219-223, P. BLAKEBOROUGH ET AL. 'The Transmission of PALplus'**

**Beschreibung**

Die Erfindung betrifft ein Verfahren zur Messung, Einstellung und/oder Entzerrung von Übertragungskanälen und/oder Decodern für PALplus-Fernsehsignale.

Stand der Technik

Die Übertragung, Aufzeichnung und Wiedergabe von Bildsignalen im Breitbildformat 16:9 wird derzeit unter dem Stichwort "PALplus" entwickelt. Hierbei wird der Kompatibilität zur bestehenden PAL-Norm höchste Priorität eingeräumt.

Erste Ergebnisse einer zukünftigen PALplus-Übertragung wurden auf der Internationalen Funkausstellung Berlin (IFA 1991) und der International Broadcasting Convention, Amsterdam (IBC 1992) demonstriert. Der Stand der Arbeiten wird in den Publikationen "PALplus The EUROPEAN SYSTEM FOR WIDE-SCREEN TERRESTRIAL TV", A. Ebner, R. Morcom, R. Ochs, U. Riemann, M. Silverberg. R. Storey, F. Vreeswijk, D. Westerkamp; IBC92 Proceedings, und "PALplus IN THE HOME", T. Vlek, M. Silverberg, C. Schepers, D. Westerkamp, IBC92 Proceedings, dokumentiert.

Für die Übertragung von PALplus-Signalen ist der sogenannte Ultraschwarz-Bereich (±150mV um das Austastniveau) vorgesehen. Dieser Bereich wird jedoch durch standardisierte Prüfzeilensignale nicht bzw. nur teilweise erfaßt. In der Veröffentlichung "The Transmission of PALplus", P. Blakeborough, M.G. Croll, J. Curtis, E. Sipek, J.Y. Tichelaar; IBC92 Proceedings, wurden daher neue Prüfsignale vorgeschlagen, die diesen speziellen Übertragungsbereich erfassen. Diese Prüfsignale bestehen vornehmlich aus an sich bekannten Signalelementen, die schon in den standardisierten Prüfzeilensignalen Verwendung finden und amplitudenmäßig dem PALplus-Übertragungsbereich angepaßt sind.

Die vorgeschlagenen Prüfsignale tragen jedoch nicht der besonderen Art der Übertragung von PALplus-Signalen Rechnung. Diese sieht nämlich vor, die PALplus-Zusatzinformationen (Helpersignal) auf den Farbträger zu modulieren und in einem Restseitenband-Modulationsverfahren zu übertragen. Ein entsprechendes Übertragungsverfahren ist in DE-A-4007092 beschrieben.

Erfindung

Der Erfindung liegt die Aufgabe zugrunde, ein Verfahren zur Erzeugung und Auswertung von Prüfsignalen zu schaffen, das insbesondere dem Restseitenband-Modulationsverfahren bei der Übertragung von PALplus-Signalen angepaßt ist. Diese Aufgabe wird durch das im Anspruch 1 angegebene Verfahren gelöst.

Die Übertragung von PALplus-Signalen wird nach der DE-A-4007092 mittels einer Modulation auf den Farbträger vorgenommen. Da PALplus-Signale einen Frequenzbereich von 0 bis 5MHz einnehmen können, wird bei der Zweiseitenband-Modulation auf den PAL-Farbträger eine größere Frequenzbandbreite belegt als der PAL-Übertragungskanal (ca. 5MHz) bietet. Die Zweiseitenband-Modulation wird mittels einer Nyquistfilterung um den Farbträger in eine Restseitenband-Modulation überführt, wodurch das gesamte Spektrum des PALplus-Signales in einem PAL-Kanal übertragbar ist. Die Hauptspektralanteile eines PALplus-Signales liegen somit im oberen Bereich um den Farbträger im PAL-Übertragungskanal. Ein Prüfsignal sollte daher gerade diesen Bereich erfassen. Zur Zeit verwendete standardisierte Prüfzeilensignale wie z.B. 2T-Impulse weisen einen starken Amplitudenabfall im oberen Spektralbereich (4-5MHz) auf und repräsentieren den von PALplus-Signalen genutzten Spektralbereich nur ungenügend. Die ebenfalls verwendeten geträgerten 20T-Impulse sind speziell für die Erfassung von Amplituden- und Laufzeitfehlern für die PAL-Farbsignalübertragung konzipiert und liefern ein Spektrum von 0-500kHz und ±500kHz um den Farbträger. Die Bandbreite ist für die Erfassung von PALplus-Übertragungskanälen unzureichend.

Eine für die Übertragung von PALplus-Signalen zweckmäßige Erfassung des Übertragungskanales im Hinblick auf dessen Amplitudenfrequenzgang und Phasengang (und damit auch eine laufzeitmäßige Erfassung) läßt sich erreichen, wenn ein Cosinus-Quadrat-Impuls in geträgerter (z.B. farbträgerfrequenter Lage) verwendet wird, der mit seinem Spektrum dem PALplus-Signalspektrum angepaßt ist. Ein geträgerter 4,5T-Impuls (T=100ns; Anstiegszeit der Sprungantwort eines idealen 5MHz Tiefpasses) liefert die geforderten Eigenschaften.

Das Spektrum eines 4,5T-Impulses weist signifikante Frequenzanteile bis ca. 2,2MHz auf. Durch die Frequenzumsetzung mit dem Farbträger - z.B. PAL-Farbträger = 4,433MHz - wird durch Zweiseitenbandmodulation ein weiterer Spektralbereich von ca. 4,4 ±2,2MHz abgedeckt. Damit belegt ein derartiger Impuls mit seinem Spektrum den Übertragungskanal vergleichsweise wie ein PALplus-Signal. Da das Spektrum des geträgerten 4,5T-Impulses die Übertragungsbandbreite eines PAL-Kanales übersteigt, wird zu dessen Auswertung eine empfängerseitige Signalverarbeitung notwendig, wie sie auch bei PALplus-Signalen Verwendung findet. Diese Signalverarbeitung besteht dann aus einer Restseitenbandfilterung (Nyquistfilter), Demodulation und anschließender Tiefpaßfilterung. Diese Signalverarbeitungsschritte können vorteilhaft in einem Meßdemodulator vereint werden.

Wird die Restseitenbandfilterung (Nyquistfilterung) für PALplussignale gemäß der DE-A-4007092 bereits auf der Senderseite vollzogen oder hälftig auf Sender und Empfänger verteilt, folgt der Meßdemodulator entsprechend in seiner Signalverarbeitung. D.h. bei senderseitiger Filterung entfällt das Nyquistfilter im Meßdemodulator, bei hälftiger Filterung enthält der Meßdemodulator ein entsprechendes Filter mit einem 3dB-Punkt bei der Farbträgerfrequenz. Die Erzeugung eines geträgerten 4,5T-Impulses geschieht prinzipiell in der Art, daß ein 4,5T-Impuls in Originalform mit einem 4,5T-Impuls in geträgerter Form (Zweiseitenband-Amplitudenmodulation mit dem Farbträger) addiert wird. Dadurch ergibt sich ein Gesamtimpuls, der nach Übertragung dem Meßdemodulator zugeführt wird.

Wird bei der Erzeugung des geträgerten 4,5T-Impulses der geträgerte Anteil mit einem Faktor 2 gegenüber dem nicht geträgerten Impuls gewichtet, ergibt sich nach der Signalverarbeitung in dem Meßdemodulator ein Gesamtimpuls mit einer unverzerrten Bodenlinie. Weist die Bodenlinie Verzerrungen auf, sind diese auf Amplituden- und Gruppenlaufzeitfehler bei der Übertragung zurückzuführen. Die Auswertung dieser Verzerrungen kann dann prinzipiell in der bekannten Form eines Nomogramms erfolgen, wie es auch für die Auswertung von geträgerten 20T-Impulsen verwendet wird. Für die Anwendung auf geträgerte 4,5T-Impulse ergeben sich dann andere Parametrierungen der Kurvenzüge. Durch die Verstärkung um den Faktor 2 des geträgerten Anteiles bei der Erzeugung des Prüfimpulses ergeben sich Amplitudenanteile im Gesamtimpuls, die unterhalb des Austastniveaus fallen. Durch entsprechende Skalierung kann hierdurch vorteilhaft der gesamte Ultraschwarz-Bereich, der für die Übertragung von PALplus-Signalen vorgesehen ist, ausgesteuert und meßtechnisch erfaßt werden.

Für die frequenzmäßige Umsetzung des 4,5T-Impulses in die farbträgerfrequente Lage wird eine Farbträgerschwingung benötigt, deren Phasenlage zunächst beliebig ist. Vorteilhaft kann hier eine Phasenlage gewählt werden, die dann als Referenz für die Demodulation der ebenfalls in farbträgerfrequenter Lage übertragenen PALplus-Signale dienen kann (z.B. U-Phase). Somit kann der geträgerte 4,5T-Impuls gleichzeitig als Phasenreferenzsignal für die phasensynchrone Demodulation der PALplus-Signale dienen.

Ein 4,5T-Impuls weist eine Fußbreite von 2*4,5*100ns = 900ns auf und ist somit ein Signal von relativ kurzer Zeitdauer. Dieses Signal kann nun in einer Zeile oder in mehreren Zeilen der vertikalen Austastlücke plaziert werden oder vorteilhaft zusammen mit den für eine PALplus-Kennung vorgesehen Identifikationssignalen kombiniert werden, die entsprechend der DE-A-4112712 beispielsweise in der von Bildsignalen freien Hälfte der ersten und/oder letzten aktiven Zeile des Fernseh-Bildsignales übertragen werden.

Im Prinzip dient das erfindungsgemäße Verfahren zur Messung von Übertragungskanälen zur kompatiblen Übertragung von Fernsehsignalen mit Bildsignal-Zusatzinformationen für eine 16:9 Darstellung wobei:

- ein auf das Übertragungsverfahren angepaßtes Prüfsignal erzeugt wird, das den Ubertragungskanal amplitudenmäßig und frequenzmäßig repräsentiert und
- gleichzeitig als Phasenreferenz für die mit dem Übertragungsverfahren verbundene phasensychrone Demodulation von Bildsignal-Zusatzinformationen dient,
- eine Modulatorschaltung zur Erzeugung und eine Meßdemodulatorschaltung zur Aufbereitung des Prüfsignales angegeben wird, wodurch die Auswertung des Prüfsignales nach an sich bekannten, aber im Hinblick auf das Prüfsignal modifizierten Verfahren möglich wird.

Vorteilhafte Weiterbildungen des erfindungsgemäßen Verfahrens ergeben sich aus den abhängigen Ansprüchen

Zeichnungen:

Anhand der Zeichnungen werden Ausführungsbeispiele der Erfindung beschrieben. Die Zeichnungen zeigen in :

Fig. 1       bekannte spektrale Lage von Bildsignal-Zusatzinformationen durch Restseitenbandmodulation in einem PAL-Kanal,
Fig. 2       Spektrum eines geträgerten 4,5T-Impulses und die Restseitenbandfilterung,
Fig. 3       resultierendes Spektrum eines geträgerten 4,5T-Impulses nach Restseitenbandfilterung,
Fig. 4       Spektren nach empfängerseitiger Demodulation und empfängerseitige Tiefpaßfilterung,
Fig. 5       empfängerseitig resultierendes Spektrum eines 4,5T-Impulses,
Fig. 6       Blockschaltbild eines Meßdemodulators,
Fig. 7       Zeitsignal eines geträgerten 4,5T-Impulses nach empfängerseitiger Demodulation,
Fig. 8       bekanntes Nomogramm zur Auswertung eines geträgerten 20T-Impulses,
Fig. 9       Bockschaltbild zur Erzeugung eines geträgerten 4,5T-Impulses,
Fig. 10      Zeitsignal des geträgerten 4,5T-Impulses nach der Generation durch eine Vorrichtung gemäß Fig. 9,
Fig. 11      mögliche Skalierung des Zeitsignales nach Fig. 10 zur Übertragung im Ultraschwarz-Bereich,
Fig. 11a     20T-Impuls mit Aussteuerung im Ultraschwarz-Bereich,

Fig. 11b     Spektrum des 20T-Impulses nach Fig.11a,

Fig. 11c     20T-Impuls nach empfängerseitiger Demodulation,

Fig. 11d     Spektrum eines 10T-Impulses mit Restseitenbandfilte rung,

Fig. 11e     amplitudenmäßige Skalierung eines 10T-Impulses mit Aussteuerung im Ultraschwarz-Bereich,

Fig. 12     Blockschaltbild für eine Teildecodierung für eine Aufnahme mit einem Videorecorder,

Fig. 13     weiteres Blockschaltbild für eine digitale Signalverarbeitung,

Fig. 14     Blockschaltbild mit Oszillogrammen der gebildeten Signale,

Fig. 15     Verformung des demodulierten Impulses in Abhängigkeit von der Phasenlage $\Delta\varphi$.

## Ausführungsbeispiele

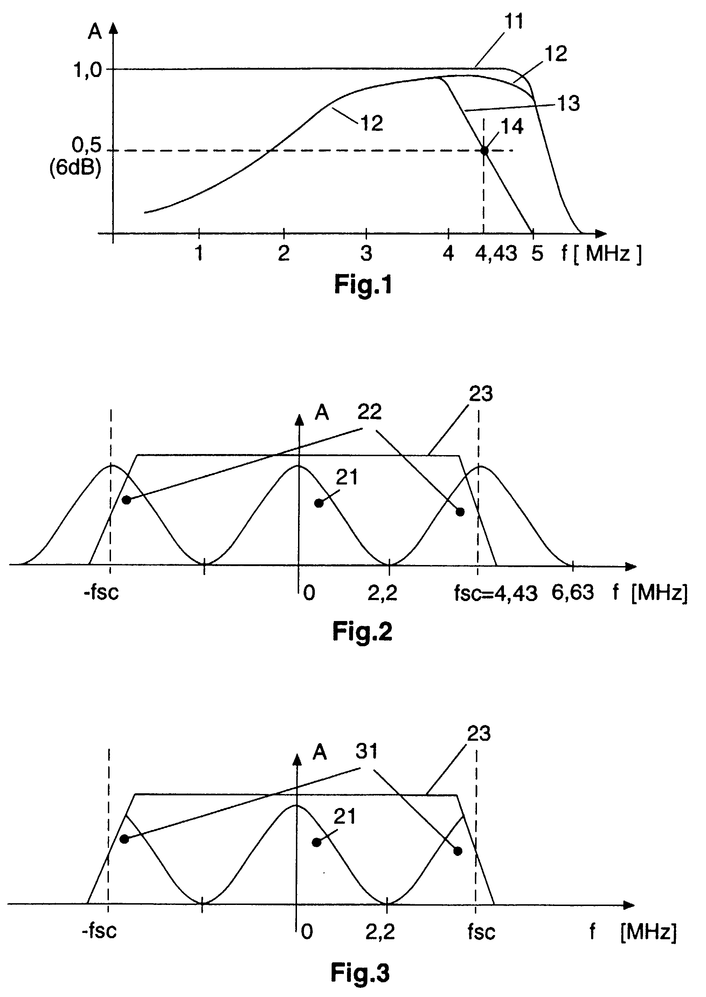

Fig. 1 zeigt die bekannte spektrale Lage von Bildsignal-Zusatzinformationen, die kompatibel in einem PAL-Kanal 11 übertragen werden. Das Spektrum 12 der Bildsignal-Zusatzinformationen ist auf einen Farbträger aufmoduliert und wird in seinem oberen Seitenband durch den PAL-Kanal 11 beschnitten. Die korrekte Übertragung des Gesamtspektrums wird dennoch erreicht durch eine Restseitenbandfilterung mit einer Nyquistflanke 13. Die Nyquistflanke 13 ist so ausgelegt, daß sie einen frequenzlinearen Verlauf bezüglich des Nyquistpunktes 14 (-6dB beim Farbträger) aufweist.

In Fig. 2 ist das Spektrum eines geträgerten 4,5T-Impulses dargestellt. Das Gesamtspektrum setzt sich entsprechend der Erzeugung eines solchen Impulses, die die Addition eines 4,5T-Impulses und eines mit dem Farbträger modulierten 4,5T-Impulses vorsieht, aus zwei Anteilen zusammen: Aus dem Spektrum 21 des (unmodulierten) 4,5T-Impulses und dem Spektrum 22 des mit dem Farbträger modulierten 4,5T-Impulses. Die Nyquistfilterung 23 entspricht der Restseitenbandfilterung mit Nyquistflanke 13 in Fig. 1.

Nach erfolgter Nyquistfilterung ergibt sich die in Fig. 3 dargestellte spektrale Formung. Aufgrund der Filterung werden von den Frequenzanteilen 22 der Fig. 2 nur noch Teile berücksichtigt, die in Fig. 3 als Spektralteile 31 gekennzeichnet sind.

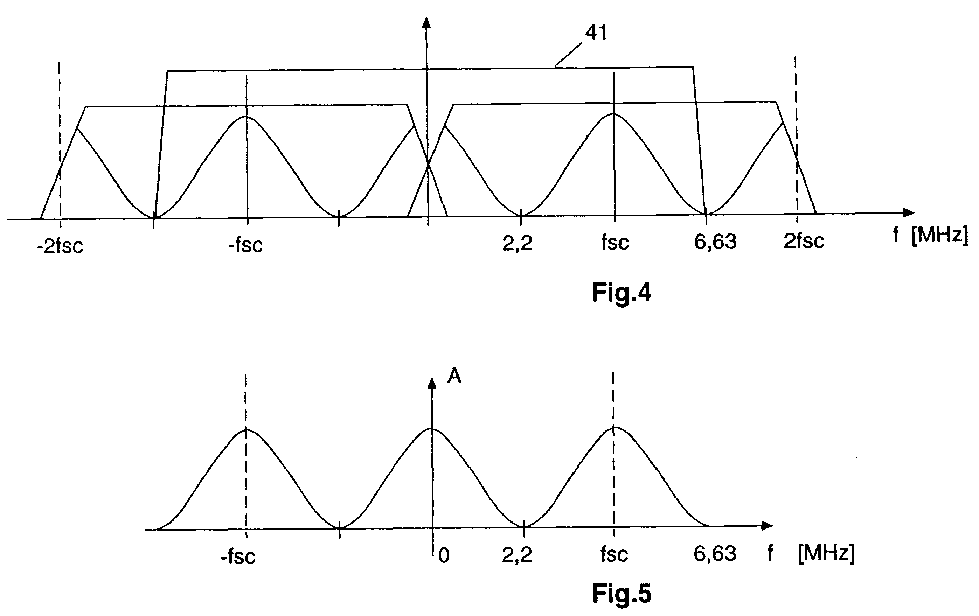

Die empfängerseitige Demodulation führt zu einer weiteren Umsetzung der Spektren der Fig. 3, welches in Fig. 4 dargestellt wird. Die Spektralanteile 31 der Fig. 3 werden durch den erneuten Modulationsvorgang in die Basisbandlage versetzt und addieren sich hier an der Nyquistflanke. Die mit doppelter Farbträgerfrequenz $f_{sc}$ auftretenden Anteile (bei $\pm 2f_{sc}$) werden durch ein Filter mit der Kennlinie 41 herausgefiltert.

Die Filterung 41 wird so ausgelegt, daß sich ein resultierendes Spektrum ergibt, wie es die Fig. 5 zeigt. Dieses ist dann mit den Spektralanteilen 21 und.22 der Fig. 2 identisch.

Die in Fig. 2 bis Fig. 5 dargestellte Spektrumsformung bezieht sich auf einen 4,5T-Impuls. Prinzipiell sind auch andere als Vielfache von T definierte Impulse denkbar.

Derartige Impulse weisen einen Zeitverlauf auf, der einer Cosinusquadratfunktion folgt. Ein im Argument der Funktion freier Parameter T* wird als Vielfaches von T definiert. Hierbei bedeutet T die Anstiegszeit der Sprungantwort eines 5MHz Tiefpaßkanales, der in der Fernsehtechnik üblicherweise verwandt wird, so daß T einer Zeitdauer von 100ns entspricht. Nennenswerte Frequenzanteile eines derartigen Impulses reichen dann bis zu der Frequenz, die mit 1/T* gegeben ist. Für einen Impuls mit T* = 4,5T = 450ns folgt daraus, daß sein Spektrum bis ca. 2,22MHz reicht. Angaben hierzu sind den Literaturstellen Wendland, B., "Fernsehtechnik, Band I: Grundlagen", S: 315 ff, und Mäusl, R., Schlagheck, E., "Meßverfahren in der Nachrichten-Übertragungstechnik", zu entnehmen.

Ein geträgerter 4,5T-Impuls weist mit seinem Spektrum gemäß der Fig. 2 eine maximale Kanalausnutzung auf, wodurch das Basisspektrum und das durch Frequenzumsetzung mit dem Farbträger versetzte Spektrum bis ca. 2,2MHz gerade aneinanderstoßen. Andere in Abhängigkeit von T definierte Cosinus-Quadrat-Impulse können jedoch die gleichen meßtechnischen Zwecke erfüllen, wenn

      4,5T < T* < ca. 10T

gilt.

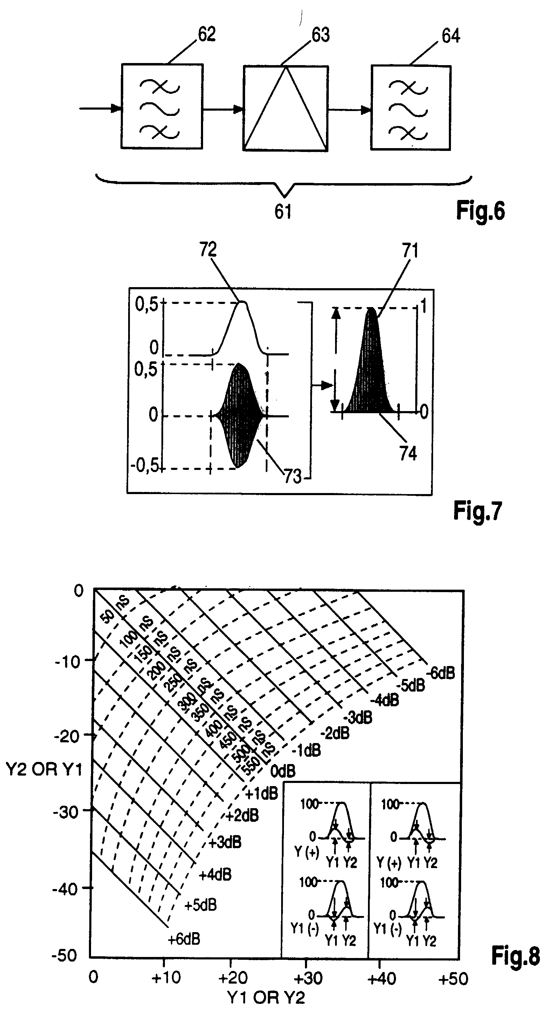

In Fig. 6 ist ein Meßdemodulator 61 gezeigt, der aus einem Restseitenbandfilter 62 mit einer Nyquistflanke 14 gemäß Fig. 1 besteht, und weiterhin einen Demodulator 63, der eine frequenz- und phasensynchrone lineare Modulation mit der Farbträgerfrequenz durchführt und ein Filter 64 mit einer spektralen Charakteristik 41 gemäß Fig. 4 beinhaltet. Ein derartiger Meßdemodulator läßt sich beispielsweise in z.Zt. bestehende komplexe Meß- und Signalanalyse-Systeme - wie z.B. VM700A (Fa. Tektronix)- integrieren. Die in diesem System angewandte digitale Signalverarbeitung erleichtert die Integration, da z.B. Filterungen rein softwaremäßig implementiert werden können.

Das durch den Meßdemodulator 61 verarbeitete Signal weist dann einen Zeitverlauf 71 gemäß Fig. 7 auf. Dieses Zeitsignal kommt durch die Addition des Basisbandsignales 72 (zugehöriges Spektrum 21, Fig. 2) und eines modulierten Anteiles 73 (zugehöriges Spektrum 22, Fig. 2) zustande. Die Addition der Anteile mit betragsmäßig gleichen Amplituden führt dann zu dem Zeitsignal 71 mit einer unverzerrten Bodenlinie 74.

Weist die Bodenlinie Verzerrungen auf, sind diese Verzerrungen auf amplituden- und laufzeitmäßige Unterschiede im Frequenzgang des Übertragungskanales zurückzuführen. Die Auswertung von Verzerrungen kann dann in der bekannten Weise mittels eines Nomogramms nach Fig. 8 erfolgen. Fig. 8 zeigt ein Nomogramm für die Auswertung von geträgerten 20T-Impulsen. Für die Auswertung anderer Impulse, z.B. geträgerter 4,5T-Impuls, ergeben sich dann geänderte Parameter in den Amplituden- und Laufzeitdarstellungen. Bei der Demodulation des übertragenen Prüfsignales in dem Meßdemodulator 61 werden die Spektralanteile 21 und 31 der Fig. 3 gleichermaßen behandelt. Hieraus ergeben sich Konsequenzen für die Erzeugung des Prüfsignales, wenn das Zeitsignal 71 (Fig. 7) nach der Demodulation eine unverzerrte Bodenlinie 74 aufweisen soll.

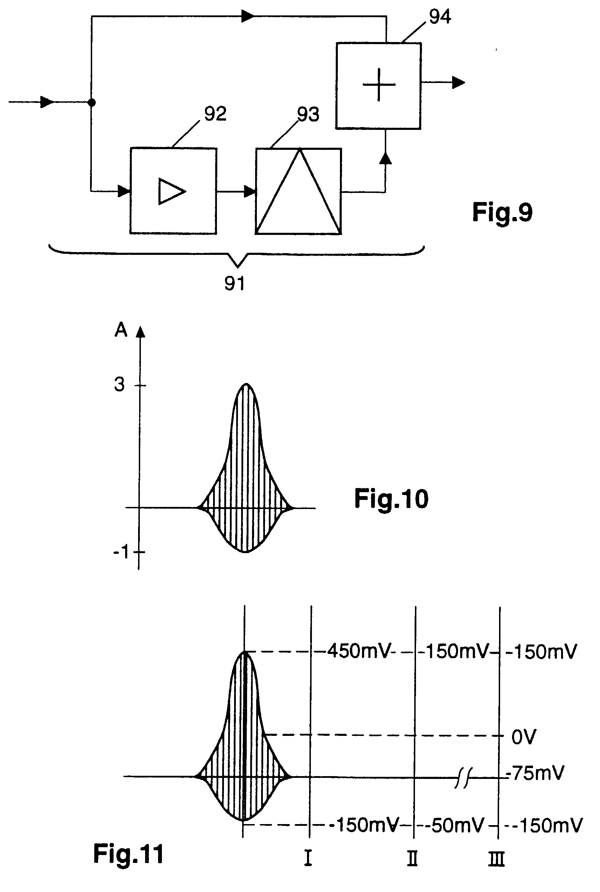

Fig. 9 zeigt eine Vorrichtung 91 zur Erzeugung eines geträgerten Impulses. Diese besteht aus einem Verstärker 92, einem linearen Modulator 93 und einer Summationsschaltung 94.

Die nachstehende nathematische Ableitung zeigt die Anforderungen an einen geträgerten Impuls auf, wenn sich nach empfängerseitiger Verarbeitung eine unverzerrte Bodenlinie gemäß Fig. 7 ergeben soll.

Hierbei sind jedoch prinzipiell zwei Fälle zu unterscheiden:

I)

Das Spektrum des Prüfimpulses ist vollständig im Ubertragungskanal übertragbar. Dies ist beispielsweise bei einem geträgerten 20T-Impuls der Fall, wenn dieser über einen mindestens 5MHz breiten Ubertragungskanal übertragen wird. Der geträgerte Anteil mit seinen zwei Seitenbändern wird dann als vollständiges ZSB-AM (Zweiseitenband-Amplitudenmodulation) Signal übertragen. In diesem Fall entfällt das Nyquist-Filter 62 des Meßdemodulators 61 der Fig. 6.

Auf diesen ersten Fall bezieht sich die nachstehende Rechnung. Der Cosinus-Quadrat-Impuls wird formuliert zu:

$$\cos^2(\pi/2*t/T^*) \qquad\qquad (\text{Gl.1}$$

Mit der Verstärkung v des Verstärkers 92 folgt für den geträgerten Cosinus-Quadrat-Impuls:

$$\cos^2(\pi/2*t/T^*)*(1 + v*\cos(2\pi f_{sc}*t)) \qquad\qquad (\text{Gl.2}$$

Die frequenz- und phasensynchrone Demodulation 63 im Meßdemodulator 61 der Fig. 6 liefert:

$$\cos^2(\pi/2*t/T^*)*(1 + v*\cos(2\pi f_{sc}*t))*\cos(2\pi f_{sc}*t) \qquad\qquad (\text{Gl.3}$$

Mit dem Additionstheorem

$$\cos(a)*\cos(b) = 1/2*(\cos(a-b) + \cos(a+b))$$

wird Gl.3 zu

$$\cos^2(\pi/2*t/T^*) *(\cos(2\pi f_{sc}*t) + v/2*(\cos(0) + \cos(4\pi f_{sc}*t))) \qquad\qquad (\text{Gl.4}$$

Der mit doppelter Farbträgerfrequenz auftretende Anteil entfällt durch das Filter 41 der Fig. 4.

Wird die Verstärkung v des Verstärkers 92 zu v=2 gewählt, ergibt sich nach Gl. 4 ein modulierter und ein unmodulierter Cosinus-Quadrat-Impuls mit betragsmäßig gleichen Amplituden mit den Zeitsignalen 73 und 72 der Fig. 7. Diese Anteile addieren sich dann zu dem gewünschten Signalverlauf 71 mit der Bodenlinie 74. Gl. 5 gibt diesen Zusammenhang wieder:

$$\cos^2(\pi/2*t/T^*)*(\cos(2\pi f_{sc}*t) + 1) \qquad\qquad (\text{Gl.5}$$

Das erzeugte Prüfsignal weist nun aufgrund der Verstärkung mit dem Faktor 2 im Modulationszweig der Signalerzeugung einen Zeitverlauf auf, der in Fig. 10 wiedergegeben ist und durch Gl. 6 beschrieben wird.

$$\cos^2(\pi/2*t/T*)*(1 + 2*\cos(2\pi f_{sc}*t)) \qquad (Gl.6$$

Dies führt zu einer Verformung der Bodenlinie in Richtung negativer Amplituden. Diese Verformung läßt sich vorteilhaft ausnutzen, um den für PALplus-Signale vorgesehenen Ultraschwarz-Bereich auszusteuern.

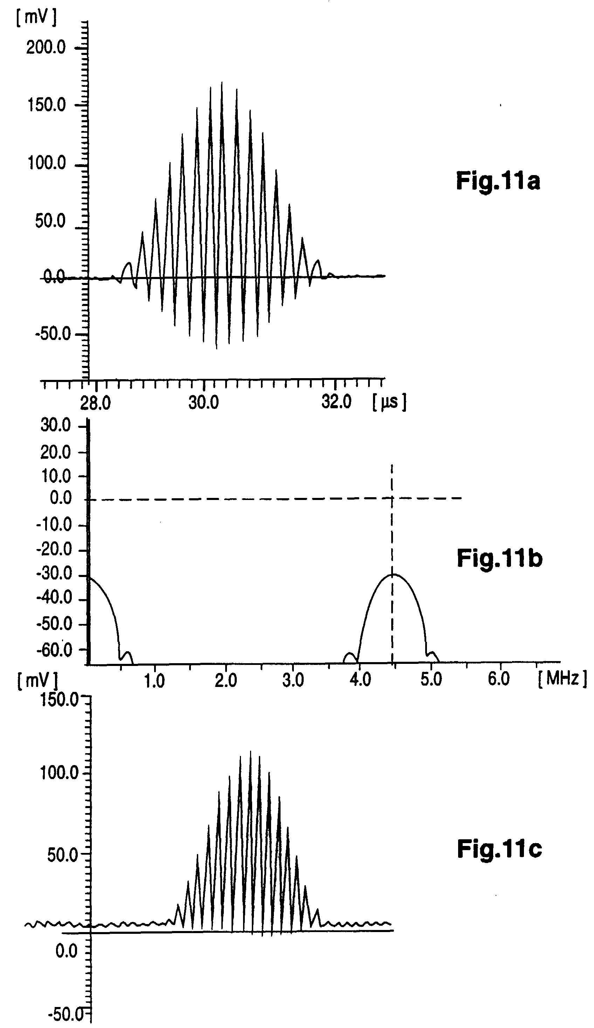

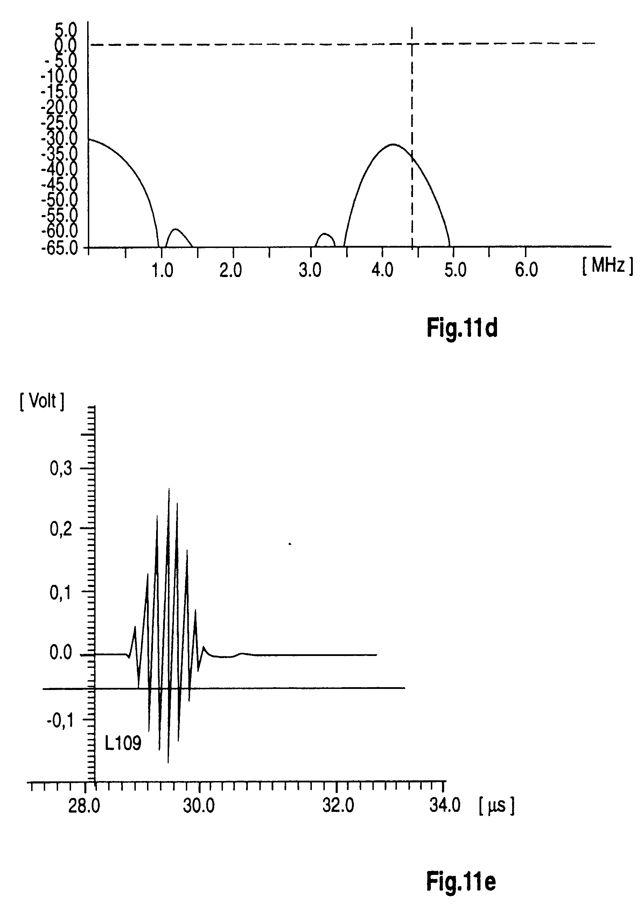

Fig. 11 zeigt mögliche Skalierungen des Zeitsignales nach Fig. 10, um den Ultraschwarz-Bereich auszusteuern:

a) Die negative Aussteuerung der Bodenlinie wird derart bemessen, daß der gesamte auszusteuernde Ultraschwarz-Bereich (bis -150mV) erfaßt wird. Aufgrund der Proportionalitäten gemäß Fig. 10 ergibt sich eine positive Aussteuerung bis 450mV.

b) Der positive Aussteuerungsbereich für Ultraschwarz-Signale wird mit +150mV vollständig erfaßt. Dadurch wird in negativer Richtung bis -50mV ausgesteuert.

c) Das Prüfsignal nach Fig. 10 wird auf einen Aussteuerungsbereich von ±150mV skaliert. Dadurch ist dann die Bodenlinie des Prüfimpulses nicht mehr identisch mit dem Austastniveau des Fernsehsignales, sondern liegt bei -75mV.

Aus Gründen signalenergetischer Betrachtungen ist die Variante a) nach Fig. 11a vorzuziehen. Die Varianten b) und c) erfüllen jedoch die gleichen meßtechnischen Anforderungen.

Fig. 11a zeigt einen geträgerten 20T-Impuls entsprechend obiger Rechnung. Das Spektrum dieses Impulses ist in Fig. 11b dargestellt. Die Spektralanteile lassen sich vollständig in einem 5MHz breiten Übertragungskanal unterbringen. Nach empfängerseitiger Demodulation und Abfilterung des mit doppelter Farbträgerfrequenz auftretenden Anteiles ergibt sich ein zeitlicher Verlauf des Prüfimpulses mit einer glatten Bodenlinie gemäß Fig. 11c.

II)

Wird als Prüfimpuls ein Signal verwendet, dessen spektrale Anteile über die Übertragungsbandbreite des Übertragungskanales hinausreichen, wird eine Restseitenbandfilterung mit einem 6dB-Nyquistpunkt bei der Farbträgerfrequenz notwendig. Durch diese Restseitenbandfilterung wird das Spektrum bei der Farbträgerfrequenz amplitudenmäßig um die Hälfte reduziert. Dies bedeutet gemäß obiger Rechnung, daß der trägerfrequente Anteil des Prüfimpulses nochmals um einen Faktor zwei gegenüber dem ungeträgerten Anteil verstärkt werden muß. Der Verstärker 92 der Fig. 9 liefert dann eine Gesamtverstärkung um den Faktor vier.

Am Beispiel eines geträgerten 10T-Impulses verdeutlicht die Fig. IId die 6dB-Amplitudenreduktion bei der Farbträgerfrequenz.

Die Fig. IIe zeigt eine mögliche amplitudenmäßige Skalierung eines geträgerten 10T-Impulses. Der unter das Austastniveau fallende Anteil beträgt 150mV und erfaßt somit den Ultraschwarz-Bereich vollständig. Entsprechend beträgt dann die Aussteuerung in den positiven Bereich 250mV. Es ergibt sich somit ein Amplitudenverhältnis (Gesamtimpuls : Ultraschwarz-Anteil) von 5:3. Eine Skalierung wie in Fig. 11e bietet sich an, wenn die Restseitenbandfilterung (= Nyquistfilter) empfängerseitig angeordnet ist. Erfolgt die Restseitenbandfilterung bereits senderseitig, gelangt der nyquistgefilterte Prüfimpuls auf den Übertragungskanal. Die amplitudenmäßige Skalierung würde sich derart ändern, daß der Ultraschwarz-Bereich nicht mehr voll ausgesteuert wäre, wenn vor der Filterung der Prüfimpuls gemäß Fig. 11e verliefe. Hier läßt sich beispielsweise eine Vollaussteuerung oder eine beliebig gewünschte Aussteuerung des Ultraschwarz-Bereiches erreichen, die nach der empfängerseitigen Demodulation des Impulses wieder auf eine unverzerrte Bodenlinie führt, wenn das Verhältnis von geträgertem Anteil zum ungeträgerten Anteil des Impulses mit 4:1 konstant gehalten wird.

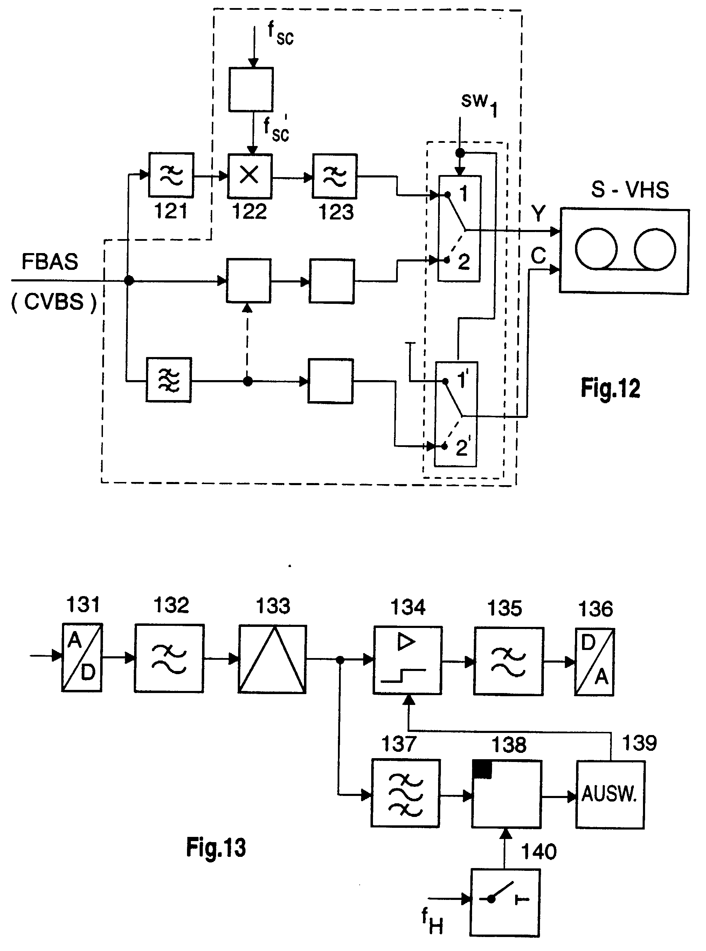

Weiterhin läßt sich das erfindungsgemäße Verfahren vorteilhaft bei der Aufzeichnung von PALplus-Signalen auf S-VHS- oder Hi8-Recordern anwenden. Die Aufzeichnung von PALplus-Signalen enthält entsprechend der DE-A-4111979 eine Teildecodierungs-Einrichtung, die die farbträgermodulierten Zusatzsignale vor der Aufzeichnung demoduliert. Diese Teildecodierungs-Einrichtung ist in Fig. 12 gezeigt und beinhaltet ein Nyquistfilter 121, einen Demodulator 122 und ein nachgeschaltetes Tiefpaßfilter 123. Somit sind die wesentlichen Teile des Meßdemodulators nach Fig. 6 bereits in der Teildecodierungs-Einrichtung enthalten. Wird die Teildecodierung nach der DE-A-4111979 unter Einschluß der Nyquistfilterung digital mittels eines in der DE-A-4111979 beschriebenen modifizierten IC-Bausteines durchgeführt, so geschieht die zur Analog-Digital-Wandlung notwendige Abtastung mit vierfacher Farbträgerfrequenz.

Fig. 13 zeigt eine prinzipielle Anordnung für die digitale Signalverarbeitung vor der S-VHS-Aufzeichnung. Das PALplus-FBAS-Signal wird in einem Analog-Digital-Wandler 131, der beispielsweise mit vierfacher Farbträgerfrequenz betrieben wird, digitalisiert. Daran anschließend erfolgt die Nyquistfilterung 132 und Demodulation 133. In einem Filter 137 wird das Signal entsprechend Fig. 4, Filter 41 bandbegrenzt. Der Prüfimpuls wird dann in einem Speicher 138 abgespeichert. Der Speicher 138 wird nur während der Zeit, für die der Prüfimpuls präsent ist, angesprochen. Die zeitliche Steuerung übernimmt eine Torschaltung 140, die mit dem Zeilensynchronimpuls $f_H$ getaktet wird. Aufgrund der geringen zeitlichen Dauer des Prüfimpulses ist nur eine kleine Speicherkapazität erforderlich (z.B.: Abtastung mit $4*f_{sc} = 17{,}73$MHz ergibt bei beispielsweise 2µs Impulsdauer ca. 140 Abtastwerte; daraus folgt bei 8Bit Auflösung eine Speicherkapazität von $40*8 = 320$Bit).

Das abgespeicherte Signal braucht dann weiterhin nicht in Echtzeit verarbeitet zu werden, sondern steht beispielsweise für eine Halbbilddauer zur Auswertung zur Verfügung, wenn der Prüfimpuls einmal pro Halbbild übertragen wird. In einer Signalauswertung 139 können dann die gespeicherten Istwerte mit Sollwerten verglichen werden. Aus den ermittelten Differenzwerten wird dann eine Steuerung eines Verstärker- und Entzerrer-Netzwerkes 134 bewirkt. Dieses Netzwerk 134 umfaßt beispielsweise eine automatische Verstärkungsregelung (AGC, Automatic Gain Control), die Amplitudenunterschiede ausgleicht, eine Laufzeitentzerrung und eine frequenzgangverbessernde Maßnahme (z.B. Pre-emphasis) für die nachfolgende Aufzeichnung auf z.B. S-VHS-Recodern.

Wird der Prüfimpuls in der von Bildsignalen freien Hälfte der ersten und letzten Zeile des aktiven Bildes übertragen, ist eine zeitliche Hysterese von einem Halbbild von Vorteil, da die Regelung sonst während des aktiven Bildes erfolgen würde. Das korrigierte Bildsignal wird dann in einem Filter 135 tiefpaßbegrenzt und einer Digital-Analog-Wandlung 136 zugeführt. Das Filter 135 kann auch analog ausgeführt werden und ist dann nach der D/A-Umsetzung anzuordnen. Das prinzipielle Verfahren kann auch auf bestehende Prüfsignale wie z.B. den 20T-Impuls angewendet werden. Entsprechend ändern sich dann die Frequenzgänge des Filters 137 und der Abgriff zur Speicherung des Prüfsignales im digitalen Signalweg nach Fig. 13. Übersteigt das auszuwertende Prüfsignal nicht die PAL-Kanalbandbreite von 5MHz, können die Filter 137 und 135 zu einem Filter zusammengefaßt werden. Andererseits ist auch eine Koeffizienten-Umschaltung eines Filters denkbar, die dann von der Torschaltung 140 gesteuert wird.

Wird beispielsweise für eine empfängerseitige automatische Verstärkungsregelung senderseitig ein Burstpaket mit Farbträgerfrequenz in einer Zeile pro Halbbild oder Vollbild zur Verfügung gestellt, so läßt sich dieses Signal nach Abtastung in dem Analog-Digital-Wandler 131 direkt dem Filter 137 zuführen und im Speicher 138 ablegen. Die Ausweiteschaltung 139 führt dann einen Soll-Ist-Vergleich durch und leitet daraus eine entsprechende Korrekturgröße für das Verstärker- und Entzerrer-Netzwerk 134 ab. Diese Vorgehensweise ist auch für den 20T-Impuls anwendbar. Je nach Komplexität des Prüfzeilensignales erhöht sich auch der Aufwand in der Auswertschaltung 139. So können die Sollwerte genormter Prüfzeilensignale in Form einer Tabelle in der Auswertschaltung 139 abgelegt sein und mit den gespeicherten (Speicher 138) Ist-Werten des übertragenen Signals verglichen werden. Aus dem Vergleich wird dann ebenfalls eine Korrekturgröße für das Verstärker- und Entzerrer-Netzwerk abgeleitet.

In dem Fall, wo ein Burstpaket mit Farbträgerfrequenz zur automatischen Verstärkungsregelung dient, läßt sich vorteilhaft der Abgriff zur Speicherung wie in Fig. 13 dargestellt durchführen. Das farbträgerfrequente Referenzsignal (Burstpaket) wird durch die Demodulation mit der Farbträgerfrequenz (Demodulator 133) zu einer Gleichspannung umgesetzt, die ein direktes Maß für die amplitudenmäßige Beeinflussung bei der Übertragung PALpluscodierter Signale liefert. Die 6dB-Dämpfung des Nyquistfilters 132 bei der Farbträgerfrequenz muß dann in der Regelung berücksichtigt werden.

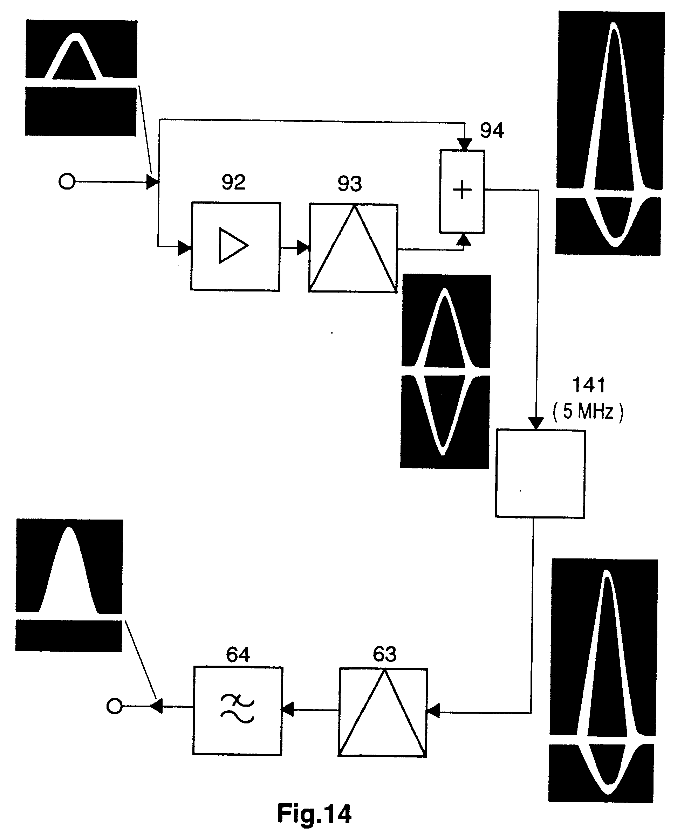

Fig. 14. zeigt die Erzeugung, Übertragung und Demodulation eines geträgerten 20T-Impulses mit verstärktem (v-2) geträgertem Anteil. Der Cosinus-Quadrat-Impuls durchläuft einen Verstärker 92 und einen Modulator 93 entsprechend Fig. 9. Es ergeben sich die dargestellten Oszillogramme. Nach der Summation 94 folgt ein resultierender Impuls mit Aussteuerung des Ultraschwarz-Bereichs. Nach Übertragung über einen vezerrungsfreien 5MHz Kanal bleibt das Oszillogramm unverändert. Nach Demodulation mit dem Farbträger in einem Demodulator 63 entsprechend Fig. 6 und Tiefpaßfilterung 64 (5MHz-Tiefpaß) ergibt sich ein resultierender Impuls mit unverzerrter Bodenlinie.

Die Anordnung eines Nyquistfilters (senderseitig, empfängerseitig oder hälftig aufgeteilt) stellt prinzipiell keine Einschränkung in der Anwendbarkeit des Verfahrens dar. Es ergeben sich folgende Möglichkeiten:

A) Nyquistfilter empfängerseitig: wie beschrieben.

B) Nyquistfilter senderseitig:
a) der Prüfimpuls durchläuft das Filter bereits im Sender b) das Filter gehört dann definitionsgemäß zum Sender und nicht zum Übertragungskanal. Der Prüfimpuls durchläuft das senderseitige Filter nicht. Ein Meßdemodulator Fig. 6 kann dann dieses Filter empfängerseitig nachbilden, welches der Prüfimpuls dann durchläuft.

C) Es ergibt sich ein dritte Variante, die auf bestehende Prüfsignale (geträgerter 20T-Impuls) zurückgreift und völlig unabhängig von einer Nyquistfilterung ist.

Bei der Übertragung von PALplus-Sendungen wird der 20T-Impuls der Prüfzeile 17 (oder andere Impulse z.B. 10T in Prüfzeilen anderer Systeme z.B. PAL(I), Großbritannien) gemäß der Fig. 9 erzeugt, d.h. der geträgerte Anteil wird gegenüber dem nicht geträgerten in der Amplitude verstärkt (z.B. v=2). Es ergibt sich dann eine Aussteuerung des Ultraschwarz-Bereiches gemäß Fig. 10. Dieser Bereich wird dann optimal erfaßt. Anhand dieser symmetrischen Aussteuerung des Ultraschwarz-Bereiches kann bereits optisch eine Kontrolle der Übertragung erfolgen. Diese symmetrische Aussteuerung bleibt bei unverzerrtem Ubertragungskanal erhalten, da der 20T-Impuls keine spektralen Anteile aufweist, die über die Kanalgrenze eines PAL-Kanales hinausreichen. Nach Demodulation mit dem Farbträger und Abfilterung der mit doppelter Farbträgerfrequenz auftretenden Spektralanteile ergibt sich eine glatte, unverzerrte Bodenlinie 74 der Fig. 7.

Ein derartiger Demodulator und ein Tiefpaßfilter ist in jedem PALplus-Empfänger vorhanden, da die farbträgermodulierten PALplus-Zusatzsignale in gleicher Weise verarbeitet werden. Ebenso findet sich eine derartige Einrichtung in einem PALplus-fähigen Aufzeichnungsgerät (z.B. S-VHS-Recorder), wenn die Zusatzinformationen vor der Aufzeichnung in ihre Basisbandlage umgesetzt werden (vgl. Fig. 12, Einrichtungen 122, 123).

In einem PALplus-Empfänger ist aufgrund der Tatsache, daß die PALplus-Zusatzsignale in einem amplitudenmäßig reduzierten Bereich, nämlich dem Ultraschwarz-Bereich, übertragen werden, eine Schaltung vorzusehen, die entsprechend einer senderseitigen (Amplituden-) Kompression eine entsprechende Expansion vornimmt. (s. z.B. Hepper, D., "Statiscs and processing of the helper signal in the TCE PALplus proposal", WG12-027, 11/90, projektinterne Veröffentlichung). Diese Expansion wird vorzugsweise digital ausgeführt.

In einem PALplus-fähigen Aufzeichnungsgerät läßt sich eine derartige Expansionsschaltung vorteilhaft mit Schaltungsmaßnahmen verknüpfen, die der Aufzeichnung Rechnung tragen (z.B. Pre-emphasis für die FM-Aufzeichnung). Gleichzeitig ist denkbar, mehrere derartige Kennlinien abzuspeichern und anhand von Kriterien, die aus übertragenen Impulsen gewonnen werden, auszuwählen. Ein solcher Impuls könnte in der einfachsten Form, ein Referenzsignal sein, das aus Farbträgerschwingungszügen besteht. Aus der Amplitude des Schwingungspaketes läßt sich rückfolgern, welche amplitudenmäßigen Beeinflussungen der Übertragungskanal aufweist. Hierauf spricht eine automatische Verstärkungsregelung an. Diese kann nun bereits in abgespeicherten Kennlinien berücksichtigt sein (zusammen mit der Expansion), wenn typische Amplituden-Beeinflussungen der Übertragungsstrecke in einigen Kennlinien berücksichtigt wurden.

Diese Möglichkeit ergibt sich uneingeschränkt für PALplus-Empfänger und -Aufzeichnungsgeräte.

In den bisherigen Ausführungen wurde davon ausgegangen, daß die empfängerseitige Demodulation eines Impulses nach Fig. 10, die dann wieder auf eine unverzerrte Impulsbodenlinie führt (bei verzerrungsfreier Übertragung) entsprechend der Bodenlinie 74 in Fig. 7, synchron zur senderseitigen Modulation (Fig. 9, 93) erfolgt.

Erfolgt die empfängerseitige Demodulation mit einer Phasenablage zwischen senderseitiger Modulationsfrequenz und empfängerseitiger Demodulationsfrequenz, so treten ebenfalls signifikante Verzerrungen des Prüfimpulses nach Fig. 10 auf.

Somit läßt sich der erfindungsgemäße Prüfimpuls vorteilhaft für die Messung der Demodulationseinrichtung der Helper-Signale in PALplus-Empfängern und PALplus-fähigen Aufzeichnungsgeräten entsprechend der Fig. 12 einsetzen.

Ausgehend von einer empfängerseitigen synchronen Demodulation ergaben sich die Gleichungen (4) bzw. (5). Berücksichtigt man eine Phasenablage zwischen sender- und empfängerseitiger Modulation bzw. Demodulation, ergibt sich:

$$\cos^2(\pi/2*t/T^*)*(\cos(2\pi f_{sc}*\tau) + \cos(2\pi f_{sc}(t-\tau)) \tag{Gl.7}$$

Hierin stellt der Ausdruck $2\pi f_{sc}*\tau = \Delta\varphi$ die Phasenablage dar.

Aus Gl.7 wird deutlich, daß der ungeträgerte Anteil des Cosinus-Quadrat-Impulses eine Amplitudengewichtung nach einer Cosinusfunktion in Abhängigkeit von der Phasenablage $\Delta\varphi$ erfährt. Somit existieren signifikante Phasenlagen, bei denen sich der Gesamtimpuls extrem verändert.

Der geträgerte Anteil wird lediglich entsprechend der Phasenablage auf der Zeitachse verschoben.

Wird beispielsweise die Phasenlage zu $\pi/2$ bzw. $3\pi/2$, so verschwindet der ungeträgerte Anteil gänzlich entsprechend $\cos(\pi/2)$ bzw. $\cos(3\pi/2) = 0$.

Dies entspricht bei Modulation mit der Farbträgerfrequenz bei PAL einer zeitlichen Abweichung von ca. 56,25ns bzw. 168,75ns zwischen sender- und empfängerseitiger Frequenz.

Bei einer Abweichung von 112,5ns ergibt sich eine Phasenablage von $\pi$, die gemäß $\cos(\pi) = -1$ zu einer Invertierung des Imulses nach Fig. 11c führt.

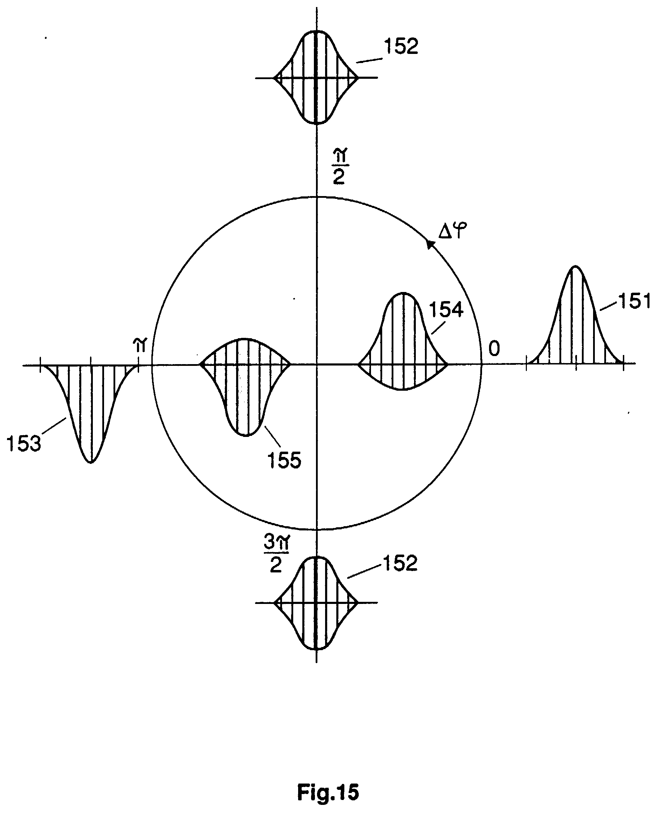

Die Verformung des demodulierten Impulses in Abhängigkeit von der Phasenablage $\Delta\phi$ zeigt Fig. 15.

Bei 0° Phasenablage wird die Demodulation korrekt durchgeführt, und es ergibt sich die gewünschte Impulsform 151. Bei Phasenablagen von 90° bzw. 270° bleibt nur ein geträgerter Impulsanteil übrig gemäß den Darstellungen 152. Bei 180° Abweichung erfolgt die Invertierung des Impulses entsprechend der Darstellung 153. Liegt die Phasenabweichung im ersten oder vierten Quadranten, ergibt sich prinzipiell eine Impulsform 154. Liegt die Abweichung im zweiten bzw. dritten Quadranten, verläuft der Impuls prinzipiell nach der Darstellung 155.

Die dargestellten Impulsverformungen lassen sich als Indikator für die Genauigkeit der empfängerseitigen Demodulation eines PALplus-Empfängers oder Aufzeichnungsgerätes auswerten, wenn ein Prüfimpuls gemäß Fig. 10 in das Endgerät eingespeist wird und der demodulierte Impuls nach Demodulation und Tiefpaßfilterung ausgewertet wird. Die Signalverarbeitung der Helper-Signale setzt in jedem PALplus-Empfänger oder -Aufzeichnungsgerät gemäß Fig. 12 Funktionseinheiten wie einen Demodulator (z.B. Fig. 6, 63, bzw. Fig. 12, 122) und ein Tiefpaßfilter (Fig. 6, 64, bzw. Fig. 12, 123) voraus, sodaß ein Abgriff nach dem Tiefpaß das gewünschte Signal liefert, welches eine Beurteilung der empfängerseitigen Demodulation, die sich auf den übertragenen Farbburst synchronisieren muß, zuläßt. Hierzu wird vorteilhaft die Modulationsphase bei der Erzeugung des Prüfimpulses identisch mit der Modulationsphase für die farbträgerfrequente Umsetzung der Helper-Signale gewählt.

Das Prüfsignal kann anstelle des Standard-20T-Impulses in der Prüfzeile 17 angeordnet sein.

Die Erfindung läßt sich ebenfalls in verbesserten NTSC- und SECAM-Systemen einsetzen.

## Patentansprüche

1. Verfahren zur Messung, Einstellung und/oder Entzerrung (134) von Übertragungskanälen (11) und/oder Dekodern für ein Fernsehsignal, wobei ein in dem Fernsehsignal enthaltenes Prüfsignal ausgewertet wird, wobei das Fernsehsignal ein von einer Übertragungsstrecke oder einem Videorekorder oder einem TV-Dekoder (121, 122, 123; 131, 132, 133) geliefertes um Bildsignal-Zusatzinformationen erweitertes Fernseh-Signal, insbesondere PALplus-Signal, ist, **dadurch gekennzeichnet**, daß die Messung, Einstellung und/oder Entzerrung unter Zuhilfenahme von Amplitudenanteilen des Prüfsignals, die unterhalb des Austastpegels eines Standard-FBAS-Signales liegen, erfolgt (139), wobei das Prüfsignal Frequenzanteile enthält, die im wesentlichen den Frequenzbereich des erweiterten Fernseh-Signales erfassen und das Prüfsignal einen geträgerten Cosinus-Quadrat-Impuls enthält.

2. Verfahren nach Anspruch 1, wobei die Trägerfrequenz des Cosinus-Quadrat-Impulses mit der Frequenz für die Modulation von PALplus-Helpersignalen identisch ist.

3. Verfahren nach Anspruch 1 oder 2, wobei die bestimmende Zeitkonstante T* des Cosinus-Quadrat-Impulses zwischen 450 ns und 2000 ns liegt.

4. Verfahren nach einem der Ansprüche 1 - 3, wobei die Messung, Einstellung und/oder Entzerrung (134) automatisch erfolgt.

5. Verfahren nach einem der Ansprüche 1 - 4, wobei das Prüfsignal zur Messung, Einstellung und/oder Entzerrung einer Demodulationseinrichtung für PALplus-Helpersignale verwendet wird.

6. Verfahren nach einem der Ansprüche 1 - 5, wobei das Prüfsignal in der vertikalen Austastlücke anstelle des 20 T-Impulses der Prüfzeile 17 oder in der vom Bildsignal freien Hälfte der ersten und/oder letzten aktiven Zeile des Fernsehbildes angeordnet ist.

7. Verfahren nach Anspruch 6, wobei das Prüfsignal anstelle des 20 T-Impulses der Prüfzeile 17 angeordnet ist.

## Claims

1. Method for measurement, adjustment and/or distortion elimination (134) of transmission channels (11) and/or decoders for a television signal, with a test signal which is contained in the television signal being evaluated and with the television signal being a television signal, in particular a PALplus signal, which is supplied from a transmission path or a video recorder or a TV decoder (121,122,123;131,132,133) and has additional video signal information added to it, characterized in that the mesurement, adjustment and/or distortion elimination are/is carried out (139) with the assistance of amplitude components of the test signal which are below the blanking level of a standard composite-video signal, with the test signal containing frequency components, which essentially cover the frequency range of the expanded television signal, and with the test signal containing a cosine-square pulse on a carrier.

2. Method according to Claim 1, with the carrier frequency of the cosine-square pulse being identical to the frequency for the modulation of PALplus helper signals.

3. Method according to one of Claims 1 or 2, with the determining time constant T* of the cosine-square pulse being between 450 ns and 2000 ns.

4. Method according to one of Claims 1 - 3, with the measurement, adjustment and/or distortion elimination (134) being carried out automatically.

5. Method according to one of Claims 1 - 4, with the test signal being used for measurement, adjustment and/or distortion elimination of a demodulation device for PALplus helper signals.

6. Method according to one of Claims 1-5, with the test signal being arranged in the vertical blanking interval instead of the 20 T pulse of test line 17 or in that half of the first and/or last active line of the television frame in which there is no video signal.

7. Method according to Claim 6, with the test signal being arranged instead of the 20 T pulse in test line 17.

**Revendications**

1. Procédé pour mesurer, ajuster et/ou égaliser (134) des canaux de transmission (11) et/ou décodeurs pour un signal de télévision, où un signal de test contenu dans le signal de télévision est évalué, et le signal de télévision est un signal, en particulier un signal PALplus, fourni par une ligne de transmission, un magnétoscope ou un décodeur TV (121, 122, 123 ; 131, 132, 133), étendu à des informations supplémentaires de signal vidéo, **caractérisé en ce que** la mesure, l'ajustement et/ou l'égalisation ont lieu (139) à l'aide de composantes d'amplitude du signal de test, situées sous le niveau de suppression d'un signal composé de chrominance standard, le signal de test comprenant des composantes de fréquence, qui détectent pour l'essentiel le domaine de fréquence du signal de télévision étendu et le signal de test comprenant une impulsion sinusoïdale en cosinus carré.

2. Procédé selon la revendication 1, où la fréquence porteuse de l'impulsion en cosinus carré est identique à la fréquence pour la modulation de signaux de compensation PALplus.

3. Procédé selon la revendication 1 ou 2 où la constante de temps déterminante T* de l'impulsion en cosinus carré se situe entre 450 ns et 2000 ns.

4. Procédé selon une des revendications 1 à 3, où la mesure, l'ajustement et/ou l'égalisation (134) ont lieu automatiquement.

5. Procédé selon une des revendications 1 à 4, où le signal de test est utilisé pour la mesure, l'ajustement et/ou l'égalisation d'un dispositif de démodulation pour des signaux de compensation PALplus.

6. Procédé selon une des revendications 1 à 5, où le signal de test est placé dans l'intervalle de suppression vertical à la place de l'impulsion 20T de la ligne de test 17 ou dans la moitié libre de signaux vidéo de la première et/ou dernière ligne active de l'image télévisuelle.

7. Procédé selon la revendication 6, où le signal de test est placé à la place de l'impulsion 20T de la ligne de test 17.

**Fig.1**

**Fig.2**

**Fig.3**

**Fig.4**

**Fig.5**

EP 0 654 950 B1

**Fig.6**

**Fig.7**

**Fig.8**

**Fig.9**

94

92 93

91

A

3

-1

**Fig.10**

450mV -150mV -150mV

0V

ƒƒ -75mV

-150mV -50mV -150mV

**Fig.11**

I II III

**Fig.11a**

**Fig.11b**

**Fig.11c**

**Fig.11d**

**Fig.11e**

**Fig.12**

**Fig.13**

**Fig.14**

**Fig.15**